# EUROPEAN PATENT SPECIFICATION

(11) **EP 2 891 290 B1**
(45) Date of publication and mention of the grant of the patent: **03.10.2018**
(21) Application number: 12883932.1
(22) Date of filing: 31.08.2012
(51) Int. Cl.: H04L 29/06, H04L 9/00, H04L 29/08

(54) **COMMUNICATION SYSTEM**
KOMMUNIKATIONSSYSTEM
SYSTÈME DE COMMUNICATION

(43) Date of publication of application: 08.07.2015
(73) Proprietor: Hewlett-Packard Development Company, L.P., Houston, Texas 77070 (US)
(72) Inventor: BUTLER, David, Boise, Idaho 83714 (US); SMITH, Kenneth, K., Boise, Idaho 83714 (US)
(74) Representative: Samson & Partner Patentanwälte mbB
(86) International application number: PCT/US2012/053493
(87) International publication number: WO 2014/035431

(56) References cited:
- EP-A1- 0 956 686
- US-A1- 2005 132 030
- US-A1- 2005 203 805
- US-A1- 2006 168 648
- US-A1- 2010 042 736
- US-A1- 2011 282 987
- US-A1- 2012 221 590

## Description

### BACKGROUND

Management of networks can be complex. Networking technology changes and enhancements can result in time consuming and costly upgrades and modifications to legacy devices and peripherals that utilize older networking technology. Simplification of such legacy device and peripheral migration is, therefore, desirable.

### BRIEF DESCRIPTION OF THE DRAWINGS

The following detailed description references the drawings, wherein:
FIG. 1 is an example of a communication system.
FIG. 2 is an example of a method of network communication.
FIG. 3 is an example of additional elements of the method of network communication of FIG. 2.
FIG. 4 is an example of a non-transitory storage medium.
FIG. 5 is an example of additional instructions that may be on the non-transitory storage medium of FIG. 4.

### DETAILED DESCRIPTION

The invention is defined by a system according to claim 1, a method according to claim 6 and a non-transitory storage medium according to claim 13. Further embodiments are set out in the dependent claims. Communication systems that utilize distributed and cloud-based networking technology provide advantages over systems that rely on more localized networking technology. This can present a dilemma, however, to enterprises that want to benefit from these advantages, but have legacy devices and/or peripherals that do not operate well or at all on such distributed or cloud-based networks.

US 2005/0132030 A1 relates to a load balancing service which examines each incoming communications to determine which platform service should receive the communication. If the incoming communication should be processed by a virtual private network service, the communication includes a virtual private network protocol frame embedded in the payload data contained in the communication. If the incoming communication should be processed by an extranet web service, the communication includes an SSL "hello" message embedded in the payload data contained in the communication. After the load balancing service determines the type of the incoming communication, it directs the communication to the appropriate platform service.

EP 0956686 B1 relates to using the HTTP protocol to send media data between clients and a server across firewalls. An HTTP multiplex protocol is used to send control and data communications for the various data stream, e.g., audio, video, and/or annotation associated with different rendering sessions across firewalls that only allow HTTP traffic on specific ports, e.g., port 80 or 8080. To this end, a unique ID is associated with each stream and included in the HTTP commands, e.g. in the HTTP header. Server and clients use the unique ID to demultiplex a command to associate the command with a particular client and file. The association of each control connection and data connection to each client with a unique ID permits multiple control an data connections (from one or more clients) to be established through the same default HTTP port on the server, bypassing the firewall.

Network print traffic on a communication system may utilize device port 9100 and HTTP traffic utilizes port 80. Secure HTTP traffic (i.e., HTTP layered with SSL) utilizes port 443. Internet Printing Protocol ("IPP") is a relatively newer printing protocol that runs over HTTP, but requires re-implementation of existing functionality both in printers and printer driver software. Standard IPP also requires the consumption of another port or two and the associated network configuration at intermediate firewalls and routers. Extra "holes" must be "punched-through" firewalls to adapt this environment to cloud-based networking. Alternatively, custom network address translation ("NAT") rules and unique hosts can be created to handle 9100 traffic and HTTP traffic.

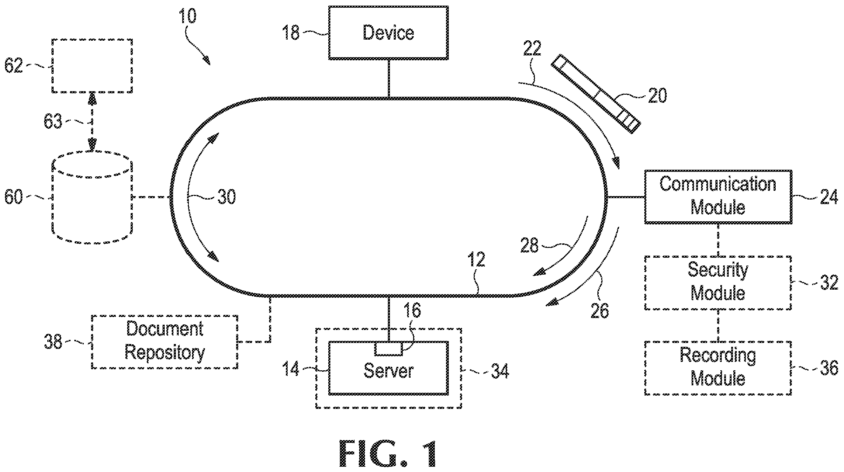

A communication system 10 directed to simplifying network administration of firewalls and servers in distributed and cloud-based environments is shown in FIG. 1. Communication system 10 helps migrate legacy devices and peripherals, such as printers and print drivers, to cloud-based networking without requiring extensive re-implementation of associated software and hardware. Communication system 10 also helps enable a content on-ramp to a document repository without requiring the installation of specialized hardware and/or software.

As used herein, the terms "non-transitory storage medium" and non-transitory computer-readable storage medium" are defined as including, but not necessarily being limited to, any media that can contain, store, or maintain programs, information, and data. Non-transitory storage medium and non-transitory computer-readable storage medium may include any one of many physical media such as, for example, electronic, magnetic, optical, electromagnetic, or semiconductor media. More specific examples of suitable non-transitory storage medium and non-transitory computer-readable storage medium include, but are not limited to, a magnetic computer diskette such as floppy diskettes or hard drives, magnetic tape, a backed-up random access memory (RAM), a read-only memory (ROM), an erasable programmable read-only memory (EPROM), a flash drive, a compact disc (CD), or a digital video disk (DVD).

As used herein, the term "processor" is defined as including, but not necessarily being limited to, an instruction execution system such as a computer/processor based system, an Application Specific integrated Circuit (ASIC), a computing device, or a hardware and/or software system that can fetch or obtain the logic from a non-transitory storage medium or a non-transitory computer-readable storage medium and execute the instructions contained therein. "Processor" can also include any controller, state-machine, microprocessor, cloud-based utility, service or feature, or any other analogue, digital and/or mechanical implementation thereof.

As used herein, "device" is defined as including, but not necessarily being limited to, a computer, phone, tablet, personal digital assistant, peripheral, document repository, storage array, or other similar device, As used herein, the term "network" is defined as including, but not necessarily being limited to, a collection of hardware (e.g., bridges, switches, routers, firewalls, etc.) and software (e.g., protocols, encryption, etc.) components interconnected by communication channels (intranet, internet, cloud, etc.) that allow sharing of resources and information, The communication channels may be wired (e.g., coax, fiber optic, etc.) and/or wireless (e.g., 802.11, Bluetooth, etc.), use various protocols (e.g., TCP/IP, Ethernet, etc.), have different topologies (ring, bus, mesh, etc.), and be localized (e.g., LAN) or distributed (e.g., WAN).

As used herein, "server" is defined as including, but not necessarily being limited to, a computer dedicated to running or controlling one or more services (as a host) to serve the needs of users of other devices on a network. Examples include, but are not limited to, a database server, file server, mail server, print server, web server, gaming server, etc. As used herein, "peripheral" is defined as including, but not necessarily being limited to, a device connected to another device or network, that expands the capabilities of the other device, such as a printer, scanner, camera, fax machine, or storage device.

As used herein, "traffic" is defined as including, but not necessarily being limited to, messages, data, or information transmitted or communicated over a network in a particular format and manner (e.g., protocol). As used herein, "port" is defined as including, but not necessarily being limited to, an application-specific or process-specific software construct serving as a communications endpoint in an operating system of a device. A port is associated with an internet protocol ("IP") address of the device, as well as the type of protocol (e.g., Transmission Control Protocol ("TCP")) used for communication.

As used herein, "protocol" is defined as including, but not necessarily being limited to, message formats and rules for exchanging data and information between devices and peripherals on a network. Protocols may include signaling, authentication, and error detection/correction capabilities. A protocol definition includes the syntax, semantics, and synchronization of communication, and may be implemented in hardware, software, or both. Examples of protocols include, without limitation: Hypertext Transfer Protocol ("HTTP") on port 80, Secure Socket Layer ("SSL") on port 443, printing on port 9100, file transfer protocol ("FTP") on port 21, and simple network management protocol ("SNMP") on port 161. As used herein, "data" is defined as including, but not necessarily being limited to, characters, numbers, letters, symbols, text, pixels, or other similar information that can be used for a variety of tasks and purposes such as printing, rendering, computing, measuring, converting, displaying, etc.

As used herein, "encryption key" is defined as including, but not necessarily being limited to, a cryptographic method that transforms "plaintext" data or information into "ciphertext" data or information, and/or vice versa during decryption, such as, for example, encrypted key exchange ("EKE"). As used herein, "multiplex" and "multiplexing" are defined as including, but not necessarily being limited to a method of utilizing a port for different network traffic. As used herein, "transceive" is defined as including, but not necessarily being limited to, the capability to both transmit and receive data or information.

Referring again to FIG. 1, communication system 10 includes a network 12 and a server 14 including a port 16 connected to network 12. Communication system 10 also includes a device 18 connected to network 12 that communicates data over network 12 via a printing protocol or an HTTP protocol, generally represented by traffic 20 and arrow 22 in FIG. 1. Communication system 10 additionally includes a communication module 24 that determines whether the data communicated by device 18 includes either the printing protocol or the HTTP protocol. Based upon the determined type of protocol, communication module 24 then establishes either a printing link 26 between device 18 and server 14 via port 16 (for printing protocol) to transceive the data over network 12, as generally represented by double-headed arrow 30 in FIG. 1, or an HTTP link 28 between device 18 and server 14 via same port 16 of server 12 (for HTTP protocol) to transceive the data over network 12, as also generally represented by double-headed arrow 30 in FIG. 1.

Thus, communication module 24 of communication system 10 establishes either printing link 26 or HTTP link 28 based on the content of the traffic 20, rather than based upon the numerical designation of a port. This has several advantages including reducing the amount of code required for server 14 because only one port 16 is needed for two types of traffic 20, rather two separate ports. It also helps reduce the amount of required network administration because there is only one port 16 that needs to go through any firewalls instead of two. Additionally, it provides seamless compatibility with drivers of legacy devices, as compared to IPP which requires wholesale driver rewriting.

Communication system 10 may additionally include a security module 32 associated with communication module 24 to decrypt either or both printing communication received via printing link 26 and/or HTTP communication received via HTTP link 28. Security module 32 may also be designed to encrypt either of both printing communication transmitted via printing link 26 and/or HTTP communication transmitted via HTTP link 28.

In some examples of communication system 10, server 14 may be embedded in a peripheral 34, such as a printing device. Communication system 10 may additionally include a recording module 36 to store data received over network 12 via printing link 26. This data may be stored by recording module 36, for example, on a document repository 38 or storage array connected to network 12.

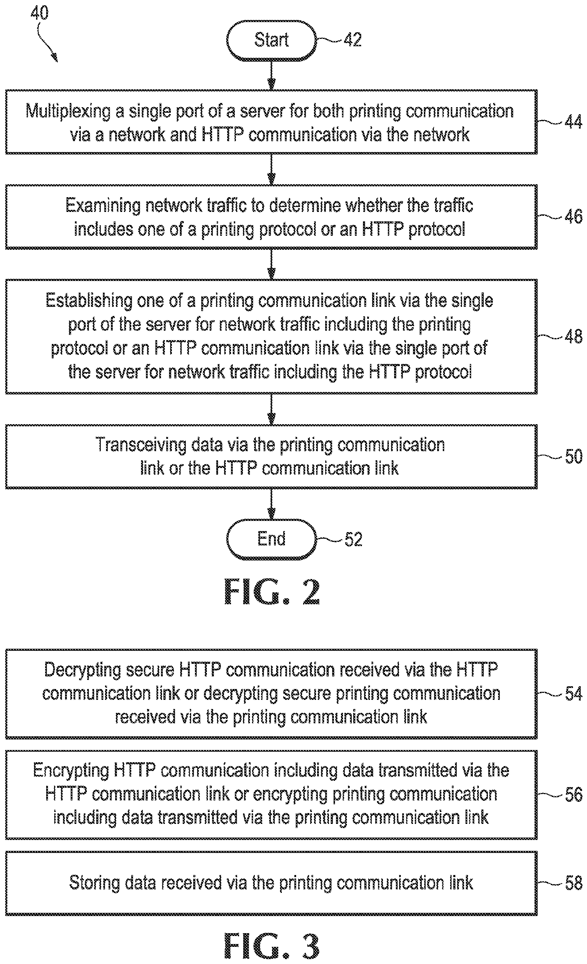

FIG. 2 is an example of a method of network communication 40. As can be seen in FIG. 2, method 40 starts or begins 42 by multiplexing a single port of a server for printing communication via a network and HTTP communication via the network, as indicated by block 44. The server may be embedded in a peripheral. Method 40 continues by examining network traffic to determine whether the traffic includes a printing protocol or an HTTP protocol, as indicated by block 46. HTTP traffic can be identified by the presence of an HTTP verb (e.g., GET, POST, PUT, etc). The data may be further examined to distinguish IPP from a "nominal" HTTP request. If one of the HTTP verbs are present in the initial communication, the identification is further confirmed by checking the validity of the HTTP header section. If the header section is valid, then the link is determined to be HTTP. If the traffic doesn't begin with a verb or the traffic doesn't begin with a valid HTTP header, then the link is determined to be a printing link.

Method 40 additionally continues by establishing a printing communication link via the single port of the server for network traffic including the printing protocol or an HTTP communication link via the single port of the server for network traffic including the HTTP protocol, as indicated by block 48. The printing communication link and/or the HTTP communication link may be wired or wireless. Method 40 further continues by transceiving data via the printing communication link or the HTTP communication link, as indicated by block 50. Method 40 may then end 52.

The communication may be handled in one of two ways: it can either be proxied by HTTP/printing software/firmware, or the link itself may be handed off in implementation specific ways such as passing a socket handle in an embedded implementation. For the proxy approach, an Automatic Multiplexing HTTP/9100 Server ("AMH9S") can open a link either to a configured HTTP server and then simply relay traffic via the pair of sockets or the proxy could multiplex the link to multiple destinations or switch from unencrypted connections to encrypted connections and vice/versa. The HTTP or port 9110 print logic behind the AMH9S receives the traffic from that point on in the same manner as if the AMH9S wasn't involved, For the direct link stream handoff, the involvement of the proxy is complete for this link.

FIG. 3 is an example of additional possible elements of the method of network communication of FIG. 2. As can be seen in FIG. 3, method 40 may include the additional functionality or element of decrypting secure HTTP communication received via the HTTP communication link or decrypting secure printing communication received via the printing communication link, as indicated by block 54. Alternatively or additionally, method 40 may include encrypting HTTP communication including data transmitted via the HTTP communication link or encrypting printing communication including data transmitted via the printing communication link, as indicated by block 56.

Encrypting the HTTP communication may include layering the HTTP protocol with a SSL protocol. Additionally or alternatively, encrypting the printing communication may include either layering the printing protocol with a SSL protocol or creating an encryption key. Furthermore or alternatively, method 40 may include storing data received via the printing communication link, as indicated by block 58. Such storage can occur via a document repository 38 or storage array,

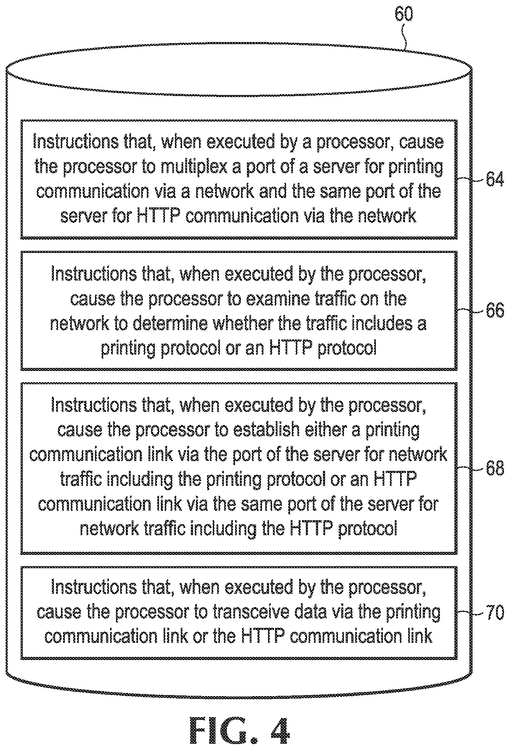

An example of a non-transitory storage medium 60 is shown in FIG. 4. As can be seen in FIG. 1, non-transitory storage medium 60 is connected to network 12 and associated with a processor 62 connected thereto, as generally indicated by doubled-headed dashed arrow 63, to receive and execute instructions stored thereon, as discussed more fully below. Processor 62 may also store/receive data on/from non-transitory storage medium 60, as also generally indicated by doubled-headed dashed arrow 63.

Referring again to FIG. 4, non-transitory storage medium 60 includes instructions that, when executed by processor 62, cause the processor 62 both to multiplex a port of a server for printing communication via a network and the same port of the server for HTTP communication via the network, as generally indicated by block 64, and to examine traffic on the network to determine whether the traffic includes either a printing protocol or an HTTP protocol, as generally indicated by block 66. As can also be seen in FIG. 4, non-transitory storage medium 60 includes additional instructions that, when executed by processor 62, cause processor 62 both to establish either a printing communication link via the port of the server for network traffic including the printing protocol or an HTTP communication link via the same port of the server for network traffic including the HTTP protocol, as generally indicated by block 68, and to transceive data via either the printing communication link or the HTTP communication link, as generally indicated by block 70.

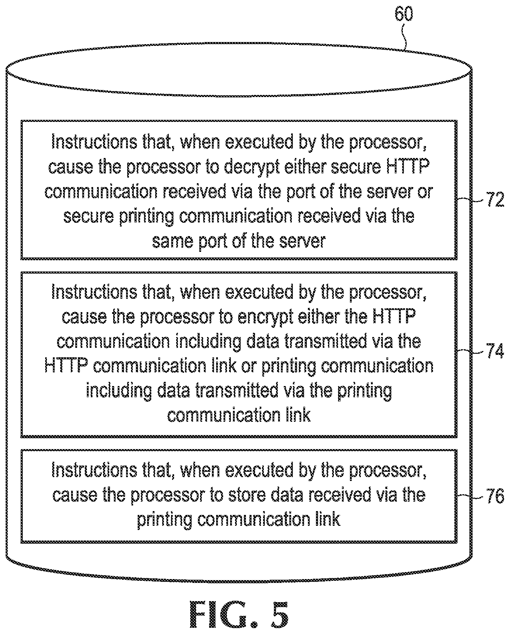

FIG. 5 is an example of additional instructions that may be on non-transitory storage medium 60. As can be seen in FIG. 5, non-transitory storage medium 60 may include instructions that, when executed by processor 62, cause processor 62 to decrypt either secure HTTP communication received via the port of the server or secure printing communication received via the same port of the server. Server 14 and/or processor 62 may be embedded in a peripheral. Non-transitory storage medium 60 may additionally or alternatively include instructions that, when executed by processor 62, cause processor 62 to encrypt either the HTTP communication including data transmitted via the HTTP communication link or printing communication including data transmitted via the printing communication link. The instructions to encrypt the HTTP communication may include layering the HTTP protocol with a SSL protocol. The instructions to encrypt the printing communication may include either layering the HTTP protocol with a SSL protocol or creating an encryption key.

Non-transitory storage medium 60 may furthermore or alternatively include instructions that, when executed by processor 62, cause processor 62 to store data received via the printing communication link. Such storage can occur via a document repository 38 or storage array. The printing communication link and/or HTTP communication link may be wireless.

Although several examples have been described and illustrated in detail, it is to be clearly understood that the same are intended by way of illustration and example only. For example, the various illustrated components such as communication module 24, security module 32, and/or recording module 36 may be implemented in hardware, software, or a combination of the two.

Additionally, reference to an element in the singular is not intended to mean one and only one, unless explicitly so stated, but rather means one or more. Moreover, no element or component is intended to be dedicated to the public regardless of whether the element or component is explicitly recited in the following claims,

## Claims

1. A communication system (10), comprising:
a network (12);
a server (14) including a port (16) connected to the network (12);
a device (18) connected to the network (12) that communicates data over the network (12) via either a printing protocol or an HTTP protocol; and
a communication module (24) that determines whether the data communicated by the device (18) includes either the printing protocol or the HTTP protocol, wherein the communication module (24) identifies the HTTP protocol by determining a presence of an HTTP verb in an initial data communication and by checking and confirming a validity of an HTTP header, and wherein the communication module (24) identifies the printing protocol if an HTTP verb or a valid HTTP header is not present in the initial data communication, and wherein the communication module (24) establishes, based on the determined type of protocol, either a printing link between the device (18) and the server via the port (16) of the server (14) to transceive the data over the network (12) or an HTTP link between the device (18) and the server (14) via the same port (16) of the server (14) to transceive the data over the network (12).

2. The communication system of Claim 1, further comprising a security module (32) associated with the communication module (24) to decrypt one of secure HTTP communication received via the HTTP link and secure printing communication received via the printing link.

3. The communication system of Claim 1, further comprising a security module (32) associated with the communication module (24) to encrypt one of HTTP communication including data transmitted via the HTTP link and printing communication including data transmitted via the printing link.

4. The communication system of Claim 1, wherein the server (14) is embedded in a peripheral.

5. The communication system of Claim 1, further comprising a recording module (36) to store data received over the network (12) via the printing link.

6. A method of network communication, comprising:
multiplexing (44) a single port (16) of a server (14) for printing communication via a network (12) and HTTP communication via the network;
examining (46), by a communication module (24), data communicated by a device (18) connected to the network (12) to determine whether the data communicated by the device includes either a printing protocol or an HTTP protocol comprising identifying, by the communication module, the HTTP protocol by determining a presence of an HTTP verb in an initial data communication and by checking and confirming a validity of an HTTP header, and identifying the printing protocol if an HTTP verb or a valid HTTP header is not present in the initial data communication;
establishing (48), by the communication module, based on the determined type of protocol, either a printing communication link between the device and the server via the single port of the server for transceiving data over the network including the printing protocol or an HTTP communication link via the same single port of the server for transceiving data over the network including the HTTP protocol; and
transceiving (50) data via either the printing communication link or the HTTP communication link.

7. The method of Claim 6, further comprising one of decrypting (54) secure HTTP communication received via the HTTP communication link and decrypting secure printing communication received via the printing communication link.

8. The method of Claim 6, further comprising one of encrypting (56) HTTP communication including data transmitted via the HTTP communication link and encrypting printing communication including data transmitted via the printing communication link.

9. The method of Claim 8, wherein encrypting the HTTP communication includes layering the HTTP protocol with a SSL protocol, and further wherein encrypting the printing communication includes one of layering the printing protocol with a SSL protocol and creating an encryption key.

10. The method of Claim 6, wherein the server is embedded in a peripheral.

11. The method of Claim 6, further comprising storing (58) data received via the printing communication link.

12. The method of Claim 6, wherein one of the printing communication link and the HTTP communication link is wireless.

13. A non-transitory storage medium, comprising:
instructions (64) that, when executed by a processor, cause the processor to multiplex a port of a server for printing communication via a network and the same port of the server for HTTP communication via the network;
instructions (66) that, when executed by the processor, cause the processor to examine data communicated by a device connected to the network to determine whether the data communicated by the device includes either a printing protocol or an HTTP protocol comprising identifying the HTTP protocol by determining a presence of an HTTP verb in an initial data communication and-by checking and confirming a validity of an HTTP header, and identifying the printing protocol if an HTTP verb or a valid HTTP header is not present in the initial data communication;
instructions (68) that, when executed by the processor, cause the processor to establish, based on the determined type of protocol, either a printing communication link between the device and the server via the port of the server for transceiving data over the network including including the printing protocol or an HTTP communication link via the same port of the server for transceiving data over the network including the HTTP protocol; and
instructions (70) that, when executed by the processor, cause the processor to transceive data via either the printing communication link or the HTTP communication link.

14. The non-transitory storage medium of Claim 13, further comprising instructions (72) that, when executed by the processor, cause the processor to decrypt one of secure HTTP communication received via the port of the server and secure printing communication received via the same port of the server.

15. The non-transitory storage medium of Claim 13, further comprising instructions (74) that, when executed by the processor, cause the processor to encrypt one of the HTTP communication including data transmitted via the HTTP communication link and printing communication including data transmitted via the printing communication link.

16. The non-transitory storage medium of Claim 15, wherein the instructions to encrypt the HTTP communication include layering the HTTP protocol with a SSL protocol, and further wherein the instructions to encrypt the printing communication include one of layering the printing protocol with a SSL protocol and creating an encryption key.

17. The non-transitory storage medium of Claim 13, wherein one of the server and the processor is embedded in a peripheral.

18. The non-transitory storage medium of Claim 13, further comprising instructions (76) that, when executed by the processor, cause the processor to store data received via the printing communication link.

19. The non-transitory storage medium of Claim 13, wherein one of the printing communication link and the HTTP communication link is wireless.

## Patentansprüche

1. Kommunikationssystem (10), umfassend:
ein Netzwerk (12);
einen Server (14), der einen Anschluss (16) beinhaltet, der mit dem Netzwerk (12) verbunden ist;
eine Vorrichtung (18), die mit dem Netzwerk (12) verbunden ist, die Daten über das Netzwerk (12) entweder über ein Druckprotokoll oder ein HTTP-Protokoll kommuniziert; und
ein Kommunikationsmodul (24), das bestimmt, ob die durch die Vorrichtung (18) kommunizierten Daten entweder das Druckprotokoll oder das HTTP-Protokoll beinhalten, wobei das Kommunikationsmodul (24) das HTTP-Protokoll identifiziert, indem ein Vorhandensein eines HTTP-Verbs in einer ursprünglichen Datenkommunikation bestimmt wird und indem eine Validität eines HTTP-Headers überprüft und bestätigt wird, und wobei das Kommunikationsmodul (24) das Druckprotokoll identifiziert, wenn ein HTTP-Verb oder ein gültiger HTTP-Header in der ursprünglichen Datenkommunikation nicht vorhanden ist, und wobei das Kommunikationsmodul (24) auf Grundlage der bestimmten Art von Protokoll entweder eine Druckverbindung zwischen der Vorrichtung (18) und dem Server über den Anschluss (16) des Servers (14), um die Daten über das Netzwerk (12) zu senden/empfangen, oder eine HTTP-Verbindung zwischen der Vorrichtung (18) und dem Server (14) über denselben Anschluss (16) des Servers (14), um die Daten über das Netzwerk (12) zu senden/empfangen, herstellt.

2. Kommunikationssystem nach Anspruch 1, ferner umfassend ein Sicherheitsmodul (32), das mit dem Kommunikationsmodul (24) verknüpft ist, um eine von sicherer HTTP-Kommunikation, die über die HTTP-Verbindung empfangen wird, und sicherer Druckkommunikation, die über die Druckverbindung empfangen wird, zu entschlüsseln.

3. Kommunikationssystem nach Anspruch 1, ferner umfassend ein Sicherheitsmodul (32), das mit dem Kommunikationsmodul (24) verknüpft ist, um eine von HTTP-Kommunikation, die über die HTTP-Verbindung übertragene Daten enthält, und Druckkommunikation, die über die Druckverbindung übertragene Daten enthält, zu verschlüsseln.

4. Kommunikationssystem nach Anspruch 1, wobei der Server (14) in ein Peripheriegerät eingebettet ist.

5. Kommunikationssystem nach Anspruch 1, ferner umfassend ein Aufzeichnungsmodul (36) zum Speichern von Daten, die über das Netzwerk (12) über die Druckverbindung erhalten werden.

6. Verfahren zur Netzwerkkommunikation, umfassend:
Multiplexen (44) eines einzelnen Anschlusses (16) eines Servers (14) für die Druckkommunikation über ein Netzwerk (12)
und HTTP-Kommunikation über das Netzwerk;
Prüfen (46), durch ein Kommunikationsmodul (24), von Daten, die durch eine Vorrichtung (18) kommuniziert werden, die mit dem Netzwerk (12) verbunden ist, um zu bestimmen, ob die durch die Vorrichtung kommunizierten Daten entweder ein Druckprotokoll oder ein HTTP-Protokoll beinhalten, umfassend das Identifizieren, durch das Kommunikationsmodul, des HTTP-Protokolls durch Bestimmen eines Vorhandenseins eines HTTP-Verbs in einer ursprünglichen Datenkommunikation und durch Überprüfen und Bestätigen einer Validität eines HTTP-Headers, und Identifizieren des Druckprotokolls, wenn ein HTTP-Verb oder ein gültiger HTTP-Header in der ursprünglichen Datenkommunikation nicht vorhanden ist;
Herstellen (48), durch das Kommunikationsmodul, auf Grundlage der bestimmten Art von Protokoll, entweder einer Druckkommunikationsverbindung zwischen der Vorrichtung und dem Server über den einzelnen Anschluss des Servers, um Daten über das Netzwerk, das das Druckprotokoll enthält, zu senden/empfangen, oder einer HTTP-Kommunikationsverbindung über denselben einzelnen Anschluss des Servers, um Daten über das Netzwerk, das das HTTP-Protokoll enthält, zu senden/empfangen;
und
Senden/Empfangen (50) von Daten entweder über die Druckkommunikationsverbindung oder die HTTP-Kommunikationsverbindung.

7. Verfahren nach Anspruch 6, ferner umfassend eines von Entschlüsseln (54) von sicherer HTTP-Kommunikation, die über die HTTP-Kommunikationsverbindung empfangen wird, und Entschlüsseln von sicherer Druckkommunikation, die über die Druckkommunikationsverbindung empfangen wird.

8. Verfahren nach Anspruch 6, ferner umfassend eines von Verschlüsseln (56) von HTTP-Kommunikation, die über die HTTP-Kommunikationsverbindung übertragene Daten enthält, und Verschlüsseln von Druckkommunikation, die über die Druckkommunikationsverbindung übertragene Daten enthält.

9. Verfahren nach Anspruch 8, wobei das Verschlüsseln der HTTP-Kommunikation das Schichten des HTTP-Protokolls mit einem SSL-Protokoll beinhaltet und wobei ferner das Verschlüsseln der Druckkommunikation eines von Schichten des Druckprotokolls mit einem SSL-Protokoll und Erzeugen eines Verschlüsselungsschlüssels beinhaltet.

10. Verfahren nach Anspruch 6, wobei der Server in ein Peripheriegerät eingebettet ist.

11. Verfahren nach Anspruch 6, ferner umfassend das Speichern (58) von Daten, die über die Druckkommunikationsverbindung empfangen werden.

12. Verfahren nach Anspruch 6, wobei eine von der Druckkommunikationsverbindung und der HTTP-Kommunikationsverbindung drahtlos ist.

13. Nichtflüchtiges Speichermedium, umfassend:
Anweisungen (64), die, wenn sie durch einen Prozessor ausgeführt werden, bewirken, dass der Prozessor einen Anschluss eines Servers für die Druckkommunikation über ein Netzwerk und denselben Anschluss des Servers für die HTTP-Kommunikation über das Netzwerk multiplext;
Anweisungen (66), die, wenn sie durch den Prozessor ausgeführt werden, bewirken, dass der Prozessor Daten prüft, die durch eine Vorrichtung kommuniziert werden, die mit dem Netzwerk verbunden ist, um zu bestimmen, ob die Daten, die durch die Vorrichtung kommuniziert werden, entweder ein Druckprotokoll oder ein HTTP-Protokoll beinhalten, umfassend das Identifizieren des HTTP-Protokolls durch Bestimmen eines Vorhandenseins eines HTTP-Verbs in einer ursprünglichen Datenkommunikation und durch Überprüfen und Bestätigen einer Validität eines HTTP-Headers, und Identifizieren des Druckprotokolls, wenn ein HTTP-Verb oder ein gültiger HTTP-Header in der ursprünglichen Datenkommunikation nicht vorhanden ist;
Anweisungen (68), die, wenn sie durch den Prozessor ausgeführt werden, bewirken, dass der Prozessor auf Grundlage der bestimmten Art von Protokoll entweder eine Druckkommunikationsverbindung zwischen der Vorrichtung und dem Server über den Anschluss des Servers, um Daten über das Netzwerk, das das Druckprotokoll beinhaltet, zu senden/empfangen, oder eine HTTP-Kommunikationsverbindung über denselben Anschluss des Servers, um Daten über das Netzwerk, das das HTTP-Protokoll beinhaltet, zu senden/empfangen, herstellt; und
Anweisungen (70), die, wenn sie durch den Prozessor ausgeführt werden, bewirken, dass der Prozessor Daten entweder über die Druckkommunikationsverbindung oder die HTTP-Kommunikationsverbindung sendet/empfängt.

14. Nichtflüchtiges Speichermedium nach Anspruch 13, ferner umfassend Anweisungen (72), die, wenn sie durch den Prozessor ausgeführt werden, bewirken, dass der Prozessor eine von sicherer HTTP-Kommunikation, die über den Anschluss des Servers empfangen wird, und sicherer Druckkommunikation, die über denselben Anschluss des Servers empfangen wird, entschlüsselt.

15. Nichtflüchtiges Speichermedium nach Anspruch 13, ferner umfassend Anweisungen (74), die, wenn sie durch den Prozessor ausgeführt werden, bewirken, dass der Prozessor eine von der HTTP-Kommunikation, die über die HTTP-Kommunikationsverbindung übertragene Daten enthält, und Druckkommunikation, die über die Druckkommunikationsverbindung übertragene Daten enthält, verschlüsselt.

16. Nichtflüchtiges Speichermedium nach Anspruch 15, wobei die Anweisungen zum Verschlüsseln der HTTP-Kommunikation das Schichten des HTTP-Protokolls mit einem SSL-Protokoll beinhalten und wobei ferner die Anweisungen zum Verschlüssen der Druckkommunikation eines von Schichten des Druckprotokolls mit einem SSL-Protokoll und Erzeugen eines Verschlüsselungsschlüssels beinhalten.

17. Nichtflüchtiges Speichermedium nach Anspruch 13, wobei einer von dem Server und dem Prozessor in ein Peripheriegerät eingebettet ist.

18. Nichtflüchtiges Speichermedium nach Anspruch 13, ferner umfassend Anweisungen (76), die, wenn sie durch den Prozessor ausgeführt werden, bewirken, dass der Prozessor über die Druckkommunikationsverbindung empfangene Daten speichert.

19. Nichtflüchtiges Speichermedium nach Anspruch 13, wobei eine von der Druckkommunikationsverbindung und der HTTP-Kommunikationsverbindung drahtlos ist.

## Revendications

1. Système de communication (10), comprenant :
un réseau (12) ;
un serveur (14) comprenant un port (16) connecté au réseau (12) ;
un dispositif (18) connecté au réseau (12) qui communique des données sur le réseau (12) via un protocole d'impression ou un protocole HTTP; et
un module de communication (24) qui détermine si les données communiquées par le dispositif (18) comprennent le protocole d'impression ou le protocole HTTP, dans lequel le module de communication (24) identifie le protocole HTTP en déterminant une présence d'un verbe HTTP dans une communication de données initiale et en vérifiant et en confirmant une validité d'un en-tête HTTP, et dans lequel le module de communication (24) identifie le protocole d'impression si aucun verbe HTTP ni aucun en-tête HTTP valide n'est présent dans la communication de données initiale, et dans lequel le module de communication (24) établit, en fonction du type de protocole déterminé, soit un lien d'impression entre le dispositif (18) et le serveur via le port (16) du serveur (14) pour émettre et recevoir les données sur le réseau (12), soit un lien HTTP entre le dispositif (18) et le serveur (14) via le même port (16) du serveur (14) pour émettre et recevoir les données sur le réseau (12).

2. Système de communication selon la revendication 1, comprenant en outre un module de sécurité (32) associé au module de communication (24) pour décrypter l'une d'une communication HTTP sécurisée reçue via le lien HTTP et d'une communication d'impression sécurisée reçue via le lien d'impression.

3. Système de communication selon la revendication 1, comprenant en outre un module de sécurité (32) associé au module de communication (24) pour crypter l'une d'une communication HTTP comprenant des données transmises via le lien HTTP et d'une communication d'impression comprenant des données transmises via le lien d'impression.

4. Système de communication selon la revendication 1, dans lequel le serveur (14) est intégré à un périphérique.

5. Système de communication selon la revendication 1, comprenant en outre un module d'enregistrement (36) pour stocker des données reçues sur le réseau (12) via le lien d'impression.

6. Procédé de communication par réseau, comprenant :
le multiplexage (44) d'un port unique (16) d'un serveur (14) pour une communication d'impression via un réseau (12) et une communication HTTP via le réseau ;
l'examen (46), par un module de communication (24), de données communiquées par un dispositif (18) connecté au réseau (12) pour déterminer si les données communiquées par le dispositif comprennent un protocole d'impression ou un protocole HTTP comprenant l'identification, par le module de communication, du protocole HTTP en déterminant une présence d'un verbe HTTP dans une communication de données initiale et en vérifiant et en confirmant une validité d'un en-tête HTTP, et en identifiant le protocole d'impression si aucun verbe HTTP ni aucun en-tête HTTP valide n'est présent dans la communication de données initiale ;
l'établissement (48), par le module de communication, en fonction du type de protocole déterminé, soit d'un lien de communication d'impression entre le dispositif et le serveur via le port unique du serveur pour émettre et recevoir des données sur le réseau comprenant le protocole d'impression, soit d'un lien de communication HTTP via le même port unique du serveur pour émettre et recevoir des données sur le réseau comprenant le protocole HTTP ; et
émettre et recevoir (50) des données via le lien de communication d'impression ou le lien de communication HTTP.

7. Procédé selon la revendication 6, comprenant en outre l'un du décryptage (54) d'une communication HTTP sécurisée reçue via le lien de communication HTTP et du décryptage d'une communication d'impression sécurisée reçue via le lien de communication d'impression.

8. Procédé selon la revendication 6, comprenant en outre l'un du cryptage (56) d'une communication HTTP comprenant des données transmises via le lien de communication HTTP et du cryptage d'une communication d'impression comprenant des données transmises via le lien de communication d'impression.

9. Procédé selon la revendication 8, dans lequel le cryptage de la communication HTTP comprend la superposition du protocole HTTP avec un protocole SSL, et dans lequel en outre le cryptage de la communication d'impression comprend l'une de la superposition du protocole d'impression avec un protocole SSL et de la création d'une clé de cryptage.

10. Procédé selon la revendication 6, dans lequel le serveur est intégré à un périphérique.

11. Procédé selon la revendication 6, comprenant en outre le stockage (58) des données reçues via le lien de communication d'impression.

12. Procédé selon la revendication 6, dans lequel l'un du lien de communication d'impression et du lien de communication HTTP est sans fil.

13. Support de stockage non transitoire, comprenant :
des instructions (64) qui, lorsqu'elles sont exécutées par un processeur, amènent le processeur à multiplexer un port d'un serveur pour une communication d'impression via un réseau et le même port du serveur pour une communication HTTP via le réseau ;
des instructions (66) qui, lorsqu'elles sont exécutées par le processeur, amènent le processeur à examiner les données communiquées par un dispositif connecté au réseau pour déterminer si les données communiquées par le dispositif comprennent un protocole d'impression ou un protocole HTTP comprenant l'identification du protocole HTTP en déterminant une présence d'un verbe HTTP dans une communication de données initiale et en vérifiant et en confirmant une validité d'un en-tête HTTP, et en identifiant le protocole d'impression si aucun verbe HTTP ni aucun en-tête HTTP valide n'est présent dans la communication de données initiale ;
des instructions (68) qui, lorsqu'elles sont exécutées par le processeur, amènent le processeur à établir, en fonction du type de protocole déterminé, soit un lien de communication d'impression entre le dispositif et le serveur via le port du serveur pour émettre et recevoir des données sur le réseau comprenant le protocole d'impression, soit un lien de communication HTTP via le même port du serveur pour émettre et recevoir des données sur le réseau comprenant le protocole HTTP ; et
des instructions (70) qui, lorsqu'elles sont exécutées par le processeur, amènent le processeur à émettre et recevoir des données via le lien de communication d'impression ou le lien de communication HTTP.

14. Support de stockage non transitoire selon la revendication 13, comprenant en outre des instructions (72) qui, lorsqu'elles sont exécutées par le processeur, amènent le processeur à décrypter l'une d'une communication HTTP sécurisée reçue via le port du serveur et d'une communication d'impression sécurisée reçue via le même port du serveur.

15. Support de stockage non transitoire selon la revendication 13, comprenant en outre des instructions (74) qui, lorsqu'elles sont exécutées par le processeur, amènent le processeur à crypter l'une de la communication HTTP comprenant des données transmises via le lien de communication HTTP et d'une communication d'impression comprenant des données transmises via le lien de communication d'impression.

16. Support de stockage non transitoire selon la revendication 15, dans lequel les instructions de cryptage de la communication HTTP comprennent la superposition du protocole HTTP avec un protocole SSL, et dans lequel en outre les instructions de cryptage de la communication d'impression comprennent l'une de la superposition du protocole d'impression avec un protocole SSL et de la création d'une clé de cryptage.

17. Support de stockage non transitoire selon la revendication 13, dans lequel l'un du serveur et du processeur est intégré à un périphérique.

18. Support de stockage non transitoire selon la revendication 13, comprenant en outre des instructions (76) qui, lorsqu'elles sont exécutées par le processeur, amènent le processeur à stocker les données reçues via le lien de communication d'impression.

19. Support de stockage non transitoire selon la revendication 13, dans lequel l'un du lien de communication d'impression et du lien de communication HTTP est sans fil.
